# FASCICULE DE BREVET EUROPEEN

(11) **EP 2 134 532 B1**
(45) Date de publication et mention de la délivrance du brevet: **23.12.2015**
(21) Numéro de dépôt: 08775617.7
(22) Date de dépôt: 03.03.2008
(51) Int. Cl.: B29C 70/38, B29C 70/54, B26D 7/14, B26D 1/08, B26D 5/12

(54) **TETE D'APPLICATION DE FIBRES AVEC SYSTEMES DE COUPE DE FIBRES PARTICULIERS**
FASERAPPLIKATORKOPF MIT SYSTEMEN ZUM SCHNEIDEN EINZELNER FASERN
FIBRE APPLICATOR HEAD INCLUDING SYSTEMS FOR CUTTING INDIVIDUAL FIBRES

(30) Priorité: 06.03.2007 FR 0701626
(43) Date de publication de la demande: 23.12.2009
(73) Titulaire: Coriolis Composites, 69001 Lyon (FR)
(72) Inventeur: HAMLYN, Alexander, F-56270 Ploemeur (FR); HARDY, Yvan, F-56100 Lorient (FR)
(86) Numéro de dépôt international: PCT/FR2008/000274
(87) Numéro de publication internationale: WO 2008/132299

(56) Documents cités:
- EP-A- 1 757 552
- WO-A-2006/060270
- FR-A- 2 882 681
- GB-A- 2 268 705
- US-A- 4 699 031
- US-A- 5 078 592
- US-A1- 2002 152 860
- US-A1- 2005 061 422

## Description

La présente invention concerne une tête d'application de fibres pour la réalisation de pièces en matériaux composites, et en particulier une tête d'application de fibres avec des systèmes de coupe de fibres particuliers.

Il est connu des machines d'application de fibres, appelées couramment machines de placement de fibres, pour l'application sur un moule mâle ou femelle d'une bande large formée de plusieurs fibres plates, de type rubans, imprégnées de résine, notamment des fibres de carbone imprégnées d'une résine thermodurcissable ou thermoplastique. Ces machines comprennent un système de déplacement d'une tête d'application de fibres, des moyens de stockage de fibres, et des moyens d'acheminement des fibres desdits moyens de stockage vers la tête d'application.

Les têtes de placement de fibres comprennent classiquement, tel que décrit notamment dans la demande internationale WO2006092514, un rouleau d'application destiné à venir en contact contre le moule pour appliquer la bande, des moyens de guidage des fibres sur ledit rouleau d'application, des moyens de coupe pour couper individuellement chaque fibre en amont du rouleau, et des moyens de réacheminement en amont de moyens de coupe pour réacheminer chaque fibre venant d'être coupée afin de pouvoir à tout moment stopper et reprendre l'application d'une bande, ainsi que choisir la largeur de la bande. Les moyens de guidage comprennent deux systèmes de conduits ou de poulies disposés en quinconce selon deux plans de guidage se rapprochant d'aval en amont l'un de l'autre pour guider séparément deux nappes ou faisceaux de fibres vers le rouleau. Pour chaque fibre, les moyens de coupe comprennent une lame plane actionnée par un vérin pneumatique et disposée en vis-à-vis d'un contre-outil fixe, et les moyens de réacheminement comprennent des contre-galets actionnés par des vérins et disposés en vis-à-vis de galets d'entraînement. Les lames et les contre-galets d'une première nappe, ainsi que leurs vérins d'actionnement associés, sont disposés côté rouleau, c'est-à-dire en aval des fibres par rapport à la direction d'avancement de la tête en utilisation, tandis que les lames et les contre-galets de l'autre nappe, ainsi que leur vérin d'actionnement associés, sont disposés en amont des fibres.

Les vérins d'actionnement en amont doivent être disposés suffisamment haut par rapport au rouleau d'application, pour pourvoir utiliser la tête sur différentes surfaces concaves, et notamment avec de faibles angles d'attaque entre la surface de dépose et la bande de fibres en sortie des moyens de guidage. La coupe des fibres est effectuée sensiblement à même distance du rouleau pour les deux nappes afin de simplifier la gestion de l'ensemble des vérins d'actionnement et ainsi optimiser la précision et la fiabilité de la tête. Les vérins en aval sont donc positionnés aussi haut que les vérins en amont. Cette disposition des vérins d'actionnement limite les possibilités d'optimisation de la compacité de la tête, et limite également la précision de réacheminement de la tête, par exemple pour l'obtention d'un début de bande avec des bords de coupe des fibres aussi alignés que possible.

Pour éviter que les fibres ne bougent, des moyens de blocage sont prévus pour bloquer individuellement chaque fibre venant d'être coupée. Ces moyens de blocage sont disposés classiquement en amont des moyens de réacheminement et comprennent leurs propres vérins d'actionnement. Outre les problèmes d'encombrement, ces nouveaux vérins d'actionnement sont délicats à commander, ils nécessitent un système de commande complexe et précis pour garantir le blocage de chaque fibre venant d'être coupée.

La demande US 2005/0061422 décrit une tête d'application selon le préambule de la revendication 1. Le but de la présente invention est de proposer une solution visant à pallier au moins l'un des inconvénients précités, qui permet notamment d'optimiser la compacité des têtes de placement de fibres tout en garantissant une bonne fiabilité dans la coupe, le réacheminement et/ou le blocage des fibres.

A cet effet, la présente invention a pour objet une tête d'application de fibres selon la revendication 1.

Selon l'invention, les lames avec leurs systèmes d'actionnement associés, tels que des vérins pneumatiques, sont tous disposés du même côté, à l'opposé des faces des fibres venant contre la surface à draper. Cette disposition des moyens de coupe permet d'effectuer des coupes de fibres au plus près du rouleau, et donc de limiter les jeux lors du réacheminement des fibres, tout en autorisant de faibles angles d'attaque entre la surface à draper et la bande de fibres sortant des moyens de guidage.

Selon un mode de réalisation , les moyens de guidage comprennent des premiers et seconds moyens de guidage disposés en quinconce selon deux plans de guidage se rapprochant l'un de l'autre d'aval en amont pour guider les fibres vers le rouleau sous la forme de deux nappes de fibres, et en ce que les moyens de coupe comprennent des premiers moyens de coupe, dont les lames sont aptes à couper individuellement les fibres de la première nappe guidées par les premiers moyens de guidage, et des seconds moyens de coupe dont les lames sont aptes à couper individuellement les fibres de la seconde nappe guidées par les seconds moyens de guidage, en passant entre les premiers moyens de guidage.

Selon une particularité, les lames des premiers moyens de coupe et les lames des seconds moyens de coupe sont disposées en quinconce selon deux plans inclinés l'un par rapport à l'autre d'un angle correspondant sensiblement à l'angle entre les deux plans de guidage, de manière à couper les fibres des deux nappes sensiblement perpendiculairement, les seconds moyens de coupe étant disposés au dessus des premiers moyens de coupe par rapport au rouleau.

Selon un mode de réalisation, les moyens de guidage comprennent des premiers canaux et des second canaux destinés respectivement à recevoir individuellement les fibres de la première et de la seconde nappes, lesdits premiers canaux sont formés à l'interface d'assemblage entre une première plaque extérieure et une plaque centrale, et lesdits seconds canaux sont formés à l'interface d'assemblage entre ladite plaque centrale et une deuxième plaque extérieure, les lames des premiers moyens de coupe passant à travers la première plaque extérieure par au moins une fente débouchant sur les premiers canaux, et les lames des seconds moyens de coupe passant à travers la première plaque et la plaque centrale, par au moins une fente de ladite plaque centrale débouchant sur les seconds canaux.

Selon une autre particularité, les moyens de coupe comprennent des contres-outils disposés perpendiculairement aux canaux de guidage, en vis-à-vis des bords de coupe des lames, et contre lesquels les lames viennent en butée en position de coupe, les contre-outils des premiers moyens de coupe étant formés par une barre en matériau élastomère logée dans un logement de la plaque centrale, et les contre-outils des seconds moyens de coupe étant formés par une barre en matériau élastomère logée dans un logement de la deuxième plaque extérieure.

Selon l'invention, la tête comprend en outre des moyens de réacheminement des fibres disposés en amont des moyens de coupe, lesdits moyens de réacheminement comprenant des contre-galets actionnés par des systèmes d'actionnement entre une position de repos et une position active pour plaquer les fibres contre au moins un rouleau d'entraînement, les contre-galets et leur systèmes d'actionnement associés étant disposés du côté du rouleau par rapport aux fibres.

Avantageusement, les moyens de réacheminement comprennent des premiers moyens de réacheminement comportant un premier rouleau d'entraînement, monté sur la plaque centrale, perpendiculairement et tangentiellement aux premiers canaux de guidage, et des contre-galets actionnés par des systèmes d'actionnement entre une position de repos et une position active pour plaquer individuellement les fibres de la première nappe contre ledit premier rouleau d'entraînement, et des seconds moyens de réacheminement disposés en amont des premiers moyens de réacheminement par rapport au sens de défilement des fibres dans les canaux de guidage, comportant un second rouleau d'entraînement, monté sur la deuxième plaque extérieure, perpendiculairement et tangentiellement aux seconds canaux de guidage, et des contre-galets actionnés entre une position de repos et une position active par des systèmes d'actionnement s'étendant entre les fibres de la première nappe pour plaquer individuellement les fibres de la deuxième nappe contre ledit second rouleau d'entraînement, les deux rouleaux étant entraînés en rotation de préférence par un moteur commun au moyen d'une courroie.

Selon une autre particularité, la tête comprend une platine support par laquelle ladite tête est destinée à être assemblée à un système de déplacement, lesdits moyens de coupe, lesdits moyens de guidage et ledit rouleau d'application, ainsi que les éventuels moyens de réacheminement, forment un module, ledit module étant apte à être assemblé par des moyens de verrouillage rapide à l'extrémité de la tige d'au moins un vérin de compactage monté sur ladite platine support. Le module comprend par exemple deux flasques support reliées entre elles par des traverses, et entre lesquelles sont montés le rouleau d'application, les moyens de guidage et les moyens de coupe. Le positionnement du même côté des nappes des moyens de réacheminement et des moyens de coupe, ainsi que d'éventuels moyens de blocage, permet un démontage aisé des moyens de guidage, puis un accès aisé aux lames et aux contre-galets.

La tête comprend avantageusement un système de connexion pneumatique et/ou électrique rapide permettant de connecter automatiquement les systèmes d'actionnement du module lors de l'assemblage de ce dernier sur la platine. Tous les systèmes d'actionnement, de type vérin pneumatique, seront par exemple connectés à des canaux d'une première plaque de connexion pneumatique du module, qui viennent se connecter de manière étanche avec les canaux d'une deuxième plaque de connexion de la platine lors de l'assemblage du module, ces derniers canaux étant connectés à des distributeurs pneumatiques portés par la platine.

Avantageusement, la tête comprend en outre un système de régulation thermique comprenant des moyens de refroidissement aptes à refroidir la deuxième plaque extérieure afin de refroidir par conduction l'ensemble des plaques de guidage, de préférence métalliques, lesdits moyens de refroidissement comprenant par exemple des moyens pour orienter un flux d'air frais sur la deuxième plaque extérieure, et/ou de préférence au moins un module thermoélectrique amené contre la deuxième plaque extérieure.

Selon un mode de réalisation, les moyens de coupe comprennent un système d'actionnement de type vérin pour chaque lame.

Avantageusement, la tête comprend en outre des moyens de blocage disposés en amont des moyens de coupe, du côté du rouleau d'application, aptes à bloquer les fibres venant d'être coupées, lesdits moyens de blocage comprenant des plots de blocage actionnés par des systèmes d'actionnement entre une position de repos et une position active de blocage, lesdits plots de blocage et lesdites lames étant avantageusement actionnées entre leur position de repos et leur position active par des systèmes d'actionnement communs, lesdits systèmes d'actionnement étant aptes, pour chaque fibre à couper et à bloquer, à déplacer une lame et un plot de blocage pour couper et bloquer la fibre, de préférence pour couper puis bloquer la fibre. L'utilisation de mêmes systèmes d'actionnement pour couper et bloquer les fibres permet de réduire le nombre de systèmes d'actionnement et donc d'obtenir une tête plus compacte, de simplifier la commande des systèmes d'actionnement, de fiabiliser le blocage des fibres, d'obtenir une meilleure précision dans le blocage de fibres et donc une meilleure précision dans le réacheminement des fibres coupées jusqu'au rouleau d'application. De préférence, la fibre est coupée puis bloquée, bien qu'une coupe et un blocage parfaitement simultanés puissent être envisagés. Selon un mode de réalisation, lesdits systèmes d'actionnement comprennent pour chaque fibre un vérin, de préférence pneumatique, portant à l'extrémité de sa tige un plot et une lame plane pour couper et bloquer individuellement une fibre, le bord de coupe étant de préférence légèrement en saillie par rapport à la surface d'appui du plot de blocage de manière à couper puis bloquer la fibre. La lame peut être montée par sa partie proximale dans un premier logement longitudinal de la tige de vérin, la tige étant équipée d'un système de blocage de la lame comprenant un pion d'actionnement monté coulissant dans un second logement longitudinal de la tige et une bille de blocage montée dans un alésage transversal reliant les deux logements, ledit pion d'actionnement étant sollicité élastiquement par des moyens élastiques dans une position de repos dans laquelle ledit pion maintient ladite bille de blocage au moins partiellement engagée dans le premier logement pour bloquer axialement la lame, en particulier dans un renfoncement ou ouverture de la lame pour la bloquer dans son premier logement, et étant apte à être déplacé de l'extérieur, au moyen d'un outil vers une position de déblocage dans laquelle la bille peut venir s'engager partiellement dans le second logement pour débloquer la lame.

Avantageusement, le plot est monté par sa partie proximale dans ledit second logement, ledit plot comprenant un passage longitudinal pour permettre le déplacement du pion monté entre le plot et le fond du logement au moyen d'un outil inséré dans ledit passage. Les lames peuvent ainsi être aisément démontées, par l'extrémité des tiges de vérin, sans nécessiter de démontage des vérins. Le système de blocage est axé selon le plot et actionné à travers le plot, cette disposition permet l'intégration d'un système de blocage sans augmenter le diamètre de la tige de vérin.

Selon un mode de réalisation, les moyens de blocage comprennent des contres-outils de blocage disposés en vis-à-vis des surfaces d'appui des plots et contre lesquels les plots viennent en butée en position active de blocage, lesdits contre-outils comprenant avantageusement deux barres rigides logées respectivement dans un logement de la plaque centrale et dans un logement de la deuxième plaque extérieure, perpendiculairement aux canaux de guidage.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence aux dessins schématiques annexés sur lesquels :
- la figure 1 représente une vue schématique de côté d'une tête d'application selon l'invention assemblée au poignet d'un robot ;
- la figure 2 représente une vue en perspective de la tête de la figure 1, certains éléments de support de la tête ayant été retirés pour mieux visualiser l'intérieur du module ;
- la figure 3 est une vue de face de la tête d'application de la figure 1 ;
- la figure 4 est une vue en éclatée et en perspective de la tête de la figure 1 illustrant les différents éléments de la tête qui sont aisément démontables ;
- la figure 5 est une vue en coupe de la tête selon le plan V-V de la figure 3, illustrant le chemin de guidage d'une fibre de la première nappe ;
- la figure 6 est une vue agrandie du détail D1 de la figure 5 ;
- la figure 7 est une vue en perspective partielle d'un système de coupe d'une fibre illustrant le plot de blocage et la lame de coupe à l'extrémité de la tige d'un vérin d'actionnement ;
- la figure 8 est une vue en coupe longitudinale partielle de la tige d'un vérin de coupe ;
- la figure 9 est une vue en coupe de la tête selon le plan IX-IX de la figure 3, illustrant le chemin de guidage d'une fibre de la deuxième nappe ;
- la figure 10 est une vue agrandie du détail D2 de la figure 9 ;
- les figures 11 et 12 sont deux vues éclatées en perspective des trois plaques constituant le système de guidage ;
- la figure 13 est une vue en perspective du système de régulation thermique, en l'absence de la plaque de protection des modules de refroidissement ;
- la figure 14 est une vue en perspective partielle du système de régulation thermique ; et,
- la figure 15 est une autre vue en perspective du système de régulation en l'absence du bec de soufflage d'air chaud.

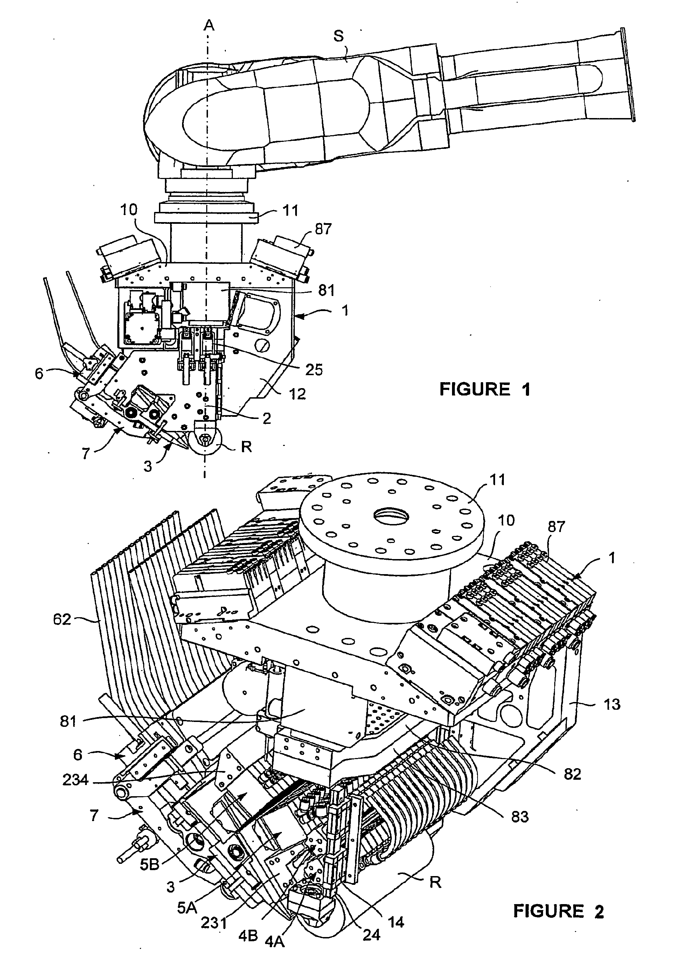

En référence aux figures 1 à 6, la tête de placement de fibres 1 comprend une platine support 10 munie en partie supérieure d'une bride 11 pour sa fixation, selon un axe d'assemblage A, à un système de déplacement S, en particulier au poignet d'extrémité d'un bras poly-articulés de type robot 6 axes.

La platine porte de manière amovible en partie inférieure un module 2 comprenant un rouleau d'application R, un système de guidage 3 permettant de guider les fibres vers le rouleau en deux faisceaux ou nappes de fibres selon deux plans de guidage P1, P2, des systèmes de coupe et de blocage 4A, 4B pour couper et bloquer individuellement chaque fibre, et des systèmes de réacheminement 5A, 5B pour réacheminer individuellement chaque fibre venant d'être coupée.

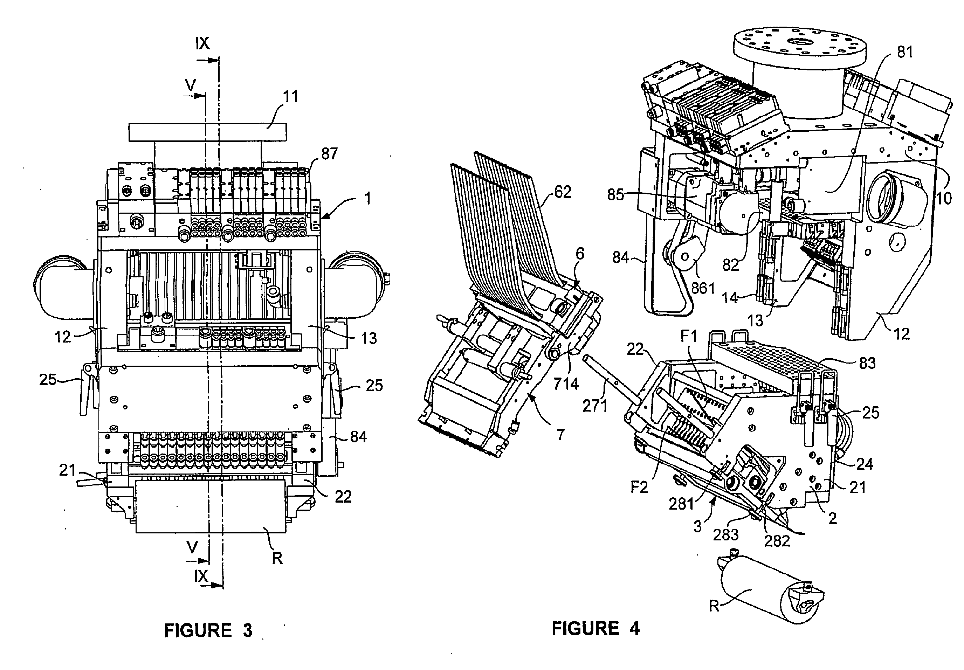

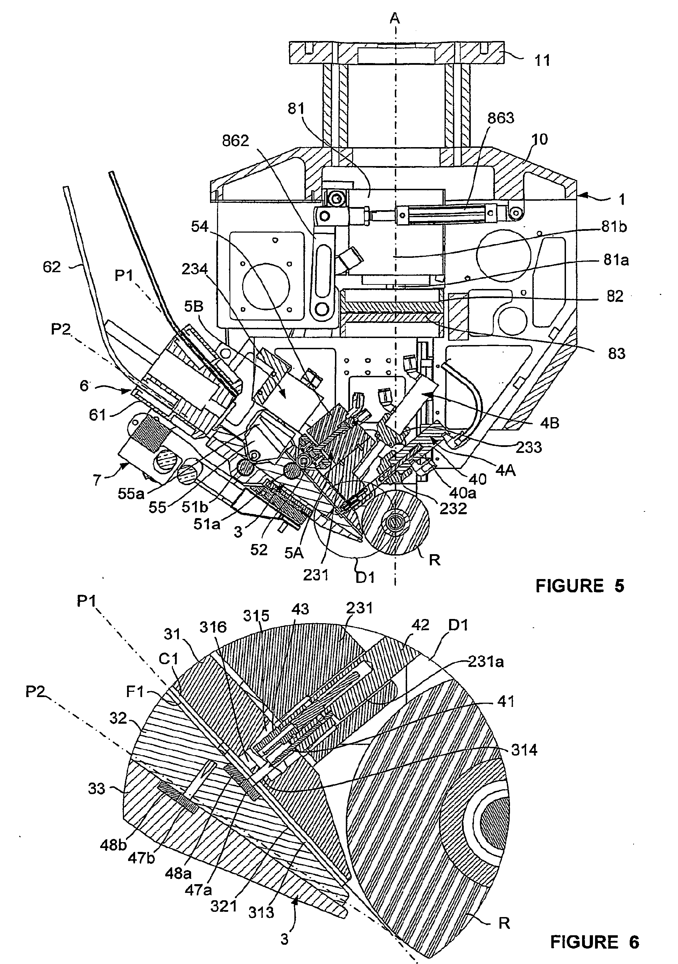

Suivant les figures 4 et 5, le module comprend deux flasques 21, 22, reliées entre elles par des traverses 231 à 234, et entre lesquelles sont montés le rouleau R, le système de guidage 3, les systèmes de coupe et de guidage 4A et 4B, ainsi que les systèmes de réacheminement 5A et 5B. Les bords arrières des flasques sont équipés de rails 24 verticaux aptes à coulisser dans des glissières complémentaires 14 montées sur les bords avant de deux plaques support verticales 12, 13, qui sont solidaires de la platine et qui s'étendent vers le bas depuis la face inférieure de la platine. Le module est assemblé aux tiges de deux vérins de compactage solidaires de la platine support. Les vérins de compactage 81 sont assemblés par leur corps 81b à la face inférieure de la platine. Une première plaque 82, dite de connexion pneumatique, est assemblée aux tiges 81a des vérins de compactage 81. Une deuxième plaque de connexion pneumatique 83 est montée sur les bords supérieurs des deux flasques 21, 22. Pour son montage, le module 2 est déplacé verticalement vers le haut en faisant coulisser les rails 24 dans les glissières 14, jusqu'à amener les plaques de connexion pneumatique 82, 83 à plat l'une contre l'autre. L'assemblage du module à la plaque est réalisé par des moyens de verrouillage rapide 25, tels que des verrous à levier de type grenouillères. Les plaques de connexion présentent une pluralité de canaux verticaux venant se disposer en vis-à-vis, de manière étanche, lors du montage du module pour assurer la connexion pneumatique des différents systèmes du module, tel que décrit ci-après.

Le rouleau R est monté rotatif sur les bords inférieurs des flasques, via un système de montage rapide 26, de type raccords quart de tour, avec son axe de rotation disposé perpendiculairement à l'axe d'assemblable A et aux tiges 85a de vérins de compactage. L'axe de rotation du rouleau, l'axe d'assemblage et les tiges de vérin de compactage sont disposés sensiblement selon un même plan.

Sur ce module 2 est monté un système d'amenée 6 des fibres permettant d'amener les fibres en deux nappes selon les plans de guidage P1 et P2 précités. Les fibres sont par exemple acheminées vers la tête par des tubes flexibles tels que décrits dans la demande WO2006092514, chaque tube recevant une fibre dans son passage interne. Le système d'amenée consiste alors en une rampe de fixation 61 sur laquelle sont fixées les parties d'extrémité 62 de tubes flexibles en quinconce, selon deux rangées. La rampe est par exemple emmanchée sur deux tiges 271 solidaires du module 2 et est maintenue fixe par des vis papillons 272 vissées sur lesdites tiges. Dans le mode de réalisation illustré, la tête est prévue pour le placement d'une bande de 32 fibres à partir de deux nappes de 16 fibres.

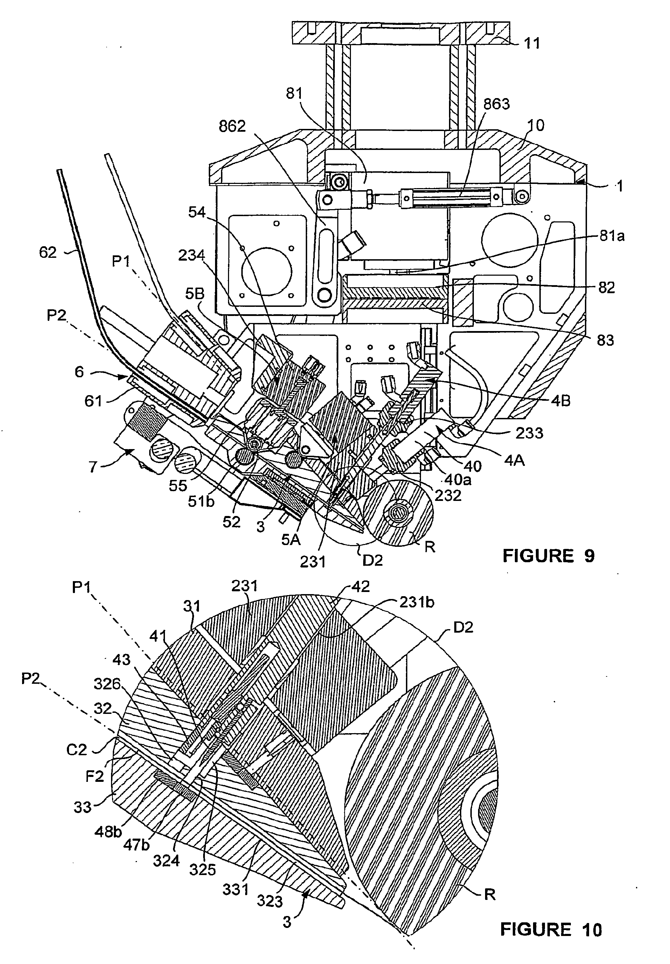

Le système de guidage 3 comprend trois plaques, de préférence métalliques, montées sur le module à plat les unes contre les autres pour définir entre elles des premiers canaux de guidage et des seconds canaux de guidage dans lesquels passent respectivement les fibres de la première nappe et de la deuxième nappe pour les amener tangentiellement au rouleau d'application. En référence aux figures 5, 6 et 9 à 12, une première plaque extérieure 31 est montée par une première face principale 311 contre une première face principale 321 d'une plaque dite centrale 32, et une deuxième plaque extérieure 33 est montée par une première face principale 331 contre la deuxième face principale 322 de la plaque centrale. La plaque centrale présente une section transversale triangulaire, l'inclinaison entre ses deux faces principales 321, 322 correspondant à l'angle entre les deux plans de guidage P1, P2. Les premiers canaux de guidage C1 (figure 6) sont constitués par des rainures longitudinales 313 ménagées sur la première face principale 311 de la première plaque extérieure, et refermées par la première face principale 321 de la plaque centrale. Ces rainures ont une largeur correspondant sensiblement à la largeur des fibres plates et sont espacées transversalement les unes des autres d'une distance correspondant sensiblement à la largeur d'une rainure. Les seconds canaux de guidage C2 (figure 10) sont formés par des rainures longitudinales 323 ménagées sur la deuxième face principale 322 de la plaque centrale, et refermées par la première face principale 331 de la deuxième plaque extérieure. Ces rainures 323 sont similaires de celles de la première plaque et décalées transversalement d'une largeur de rainure par rapport à ces dernières, de sorte que les premiers et seconds canaux soient disposés en quinconce et que les fibres F1 et F2 des deux nappes soient sensiblement disposées bord à bord au niveau du rouleau d'application pour former la bande à appliquer. Comme illustré sur les figures 6 et 10, l'intersection entre les deux plans de guidage P1, P2 est située en aval du système de guidage, au niveau du rouleau.

Suivant les figures 4, 11 et 12, les trois plaques sont montées sur les bords avant des flasques, en amont du rouleau par rapport au sens de déplacement de la tête en utilisation, au moyen de tiges filetées supérieures 281 et inférieures 282 montées pivotantes sur les flasques et venant s'insérer dans des encoches latérales supérieure 339a et inférieure 339b de la deuxième plaque extérieure 33, cette dernière ayant une largeur plus importante que les deux autres plaques 31, 32. Des écrous 283 sont vissés sur l'extrémité des tiges pour venir en appui contre la deuxième plaque extérieure et serrer les plaques les unes contre les autres, la première plaque venant en appui par sa deuxième face principale contre une première traverse 231. Pour assurer le centrage des plaques, la première plaque extérieure et la plaque centrale présentent des plots de centrage 318a, 328a venant respectivement s'insérer dans des renfoncements complémentaires 328b, 338b de la plaque centrale et la deuxième plaque extérieure. La première plaque comprend également des renfoncements 318b destinés à recevoir des plots complémentaires de la première traverse.

Le module comprend un système de coupe et de blocage pour chaque fibre, chaque système comprenant une lame plane et un plot de blocage montés à l'extrémité de la tige d'un vérin pneumatique, ainsi qu'un contre-outil de coupe et un contre-outil de blocage disposés en vis-à-vis respectivement de la lame et du plot de blocage.

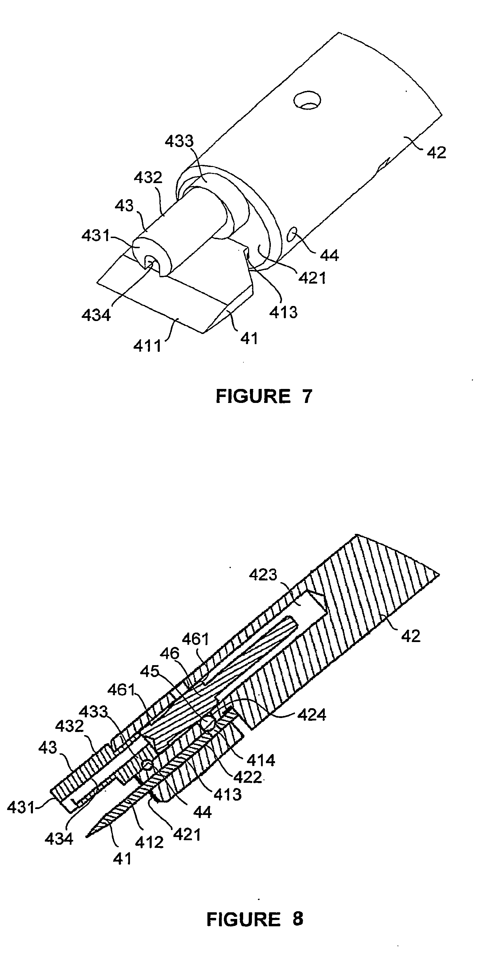

En référence aux figures 5, 7 et 8, pour chaque système de coupe et de blocage, la lame plane 41 est montée fixe à l'extrémité de la tige cylindrique 42 du vérin 40, et présente un bord de coupe biseauté 411 disposé perpendiculairement à la tige de vérin. La largeur du bord de coupe est légèrement supérieure à la largeur d'un canal de guidage C1, C2, de manière à garantir la coupe complète d'une fibre. La lame comprend une partie distale 412 large qui est munie du bord de coupe et qui se prolonge par une partie proximale de montage 413 plus étroite, par laquelle la lame est montée dans un premier logement longitudinal 422 de section rectangulaire prévu sur la surface plane d'extrémité 421 de la tige. Le plot présente une partie distale cylindrique 432, définissant une surface d'appui plane 431 perpendiculaire à la tige de vérin, et se prolongeant par une portion proximale de montage ou embase cylindrique 433. Le plot est fixé par son embase dans un second logement cylindrique 423 de la surface d'extrémité 421. Les deux logements sont disposés parallèlement et de part et d'autre de l'axe de la tige. Le bord de coupe 411 de la lame est disposé légèrement en saillie par rapport à la surface d'appui 431 du plot de blocage.

L'assemblage du plot sur la tige est assuré par une goupille 44 insérée dans un alésage transversal de la tige, et passant dans un renfoncement périphérique de l'embase 433 pour bloquer le plot.

L'assemblage de la lame sur la tige est assuré par une bille de blocage 45 disposée dans un alésage transversal 424 reliant les deux logements 422, 423. La bille présente un diamètre supérieur à la longueur de l'alésage et peut venir s'engager partiellement dans une lumière 414 de la partie proximale de la lame pour bloquer cette dernière.

Un pion 46 est monté coulissant dans le second logement entre le fond du logement et l'embase du plot et est sollicité élastiquement dans une position dite de blocage contre l'embase du plot par des moyens élastiques, par exemple par un ressort de compression (non représenté) monté entre le fond du logement et un épaulement annulaire 462 du pion. Le pion a un diamètre extérieur correspondant sensiblement au diamètre du second logement, et présente un rétrécissement progressif de son diamètre en direction de son extrémité distale pour former une gorge annulaire 461 dans laquelle peut être reçue partiellement la bille. Le plot présente un passage longitudinal 434 s'étendant sur toute sa longueur pour pouvoir y insérer un outil, tel qu'une pointe métallique afin de déplacer le pion à l'encontre du ressort. Dans sa position de blocage illustrée sur la figure 6, le pion maintient la bille dans la lumière de la lame pour bloquer cette dernière. Pour le retrait d'une lame, le pion est déplacé à l'intérieur du logement en insérant un outil dans le passage 434, jusqu'à amener le pion en appui par son extrémité proximale contre le fond du logement. Dans cette position dite de déblocage, la gorge du pion est positionnée en vis-à-vis de la bille. Lorsqu'une traction est exercée sur la lame, la bille se déplace vers la gorge et sort ainsi de la lumière 414 pour débloquer la lame. Le pion sera également amené en position de déblocage pour le montage d'une lame.

Des premiers et seconds systèmes de coupe et de blocage, référencés respectivement 4A et 4B, sont destinés à la coupe et au blocage respectivement de la première nappe de fibres et de la seconde nappe de fibres.

En référence aux figures 5, 6, 11 et 12, les vérins 40 des premiers systèmes de coupe et de blocage 4A sont fixés par leur corps 40a à une seconde traverse 232 selon une première rangée transversale 231. Les tiges 41 des vérins passent à travers la première traverse, chaque tige étant guidée dans un perçage 231a de cette première traverse. La première plaque du système de guidage comprend une fente transversale 314, traversant la plaque de part en part et disposée perpendiculairement aux rainures 313, pour le passage des lames de l'ensemble des premiers systèmes de coupe et de blocage. Les vérins sont disposés côte à côte de sorte que les tiges soient centrées selon les premiers canaux C1, sensiblement perpendiculairement au premier plan de guidage P1. La première plaque présente en outre sur sa deuxième face principale une rangée de renfoncements cylindriques 315 pour le passage des tiges de vérins, le fond de chaque renfoncement étant traversé par la fente transversale 314 et étant muni d'un trou circulaire 316 pour le passage du plot, ledit trou débouchant sur une rainure 313 en amont de la fente 314 par rapport au sens de déplacement des fibres.

Les contre-outils de coupe de ces premiers systèmes de coupe et de blocage 4A sont formés ici d'une barre transversale 47a en élastomère logée dans un renfoncement de la première face principale 321 de la plaque centrale. Les contre-outils de blocage de ces premiers systèmes 4A sont formés d'une même barre métallique 48a logée dans le même renfoncement que la barre élastomère, parallèlement et en amont de cette dernière. Les deux barres affleurent sensiblement à la première surface principale 321 en fonction de l'épaisseur des fibres.

Le vérin de chaque premier système de coupe et de blocage est apte à déplacer sa lame et son plot depuis une position de repos illustrée à la figure 6, vers une position active pour couper et bloquer une fibre. Dans la position de repos, la lame et le plot sont disposés dans un renfoncement 315, le bord de coupe 311 de la lame et la surface d'appui 431 du plot étant écartés du canal de guidage C1. Lors de son déplacement vers la position active, la tige de vérin rentre dans le renfoncement 315, la lame passe par la fente 314et le plot passe par le trou 316 du renfoncement. La lame légèrement plus longue que le plot de blocage vient en butée contre la barre en élastomère 47a et coupe la fibre, puis le plot vient en butée par sa surface d'appui contre la barre métallique 48a et pince la fibre en amont de la lame.

En référence aux figures 9 et 10, les vérins des seconds systèmes de coupe et de blocage 4B sont fixés par leur corps à une troisième traverse 233, selon une deuxième rangée transversale disposée au dessus de la première rangée de vérins du premier système 4A. Les tiges des vérins passent par un perçage 231b de la première traverse 231, la première plaque 31 et la plaque centrale 32, de sorte que leur lame et leur plot puissent venir couper et bloquer perpendiculairement les fibres de la seconde nappe dans les seconds canaux C2.

La première plaque 31 du système de guidage comprend une rangée transversale de trous traversant 317 disposés en quinconce par rapport aux renfoncements 315, et en amont de ces derniers par rapport au sens de défilement des fibres. Ces trous débouchent sur la deuxième face principale entre les rainures 313. La deuxième plaque présente sur sa première face principale 321 une rangée transversale de renfoncements cylindriques 325, disposée en amont des contre-outils de coupe et de blocage 47a, 48a. Lorsque les plaques sont assemblées, les renfoncements 325 et les trous 317 sont alignés et leurs axes sont disposés perpendiculairement à la seconde face principale 322 de la plaque centrale. Le fond de ces renfoncements 325 est muni d'un trou traversant 326 pour le passage d'un plot de blocage, chaque trou débouchant dans une rainure 323. Une fente longitudinale 324 est ménagée depuis la deuxième face principale de la plaque centrale pour le passage des lames, cette fente débouchant partiellement sur la première face principale de la plaque centrale. Les contre-outils de coupe et de blocage sont formés comme précédemment d'une barre transversale en élastomère 47b et d'une barre métallique 48b, logées cette fois-ci dans un renfoncement de la première face principale de la plaque centrale. Les vérins de ces seconds systèmes de coupe et de blocage 4B sont fixés de sorte que, dans la position de repos des vérins, les tiges s'étendent dans les trous 317 avec les plots et lames dans les renfoncements 325. Lors de son déplacement vers la position active, la tige rentre dans le renfoncement 325, la lame passe par la fente 324 et le plot par le trou 326. La lame légèrement plus longue que le plot de blocage vient en appui contre la barre en élastomère et coupe la fibre, puis la fibre en amont de la lame est pincée entre le plot et la barre métallique.

Cette disposition des premiers et seconds systèmes de coupe et de blocage, avec les vérins pour la deuxième nappe de fibres la plus éloignée du rouleau qui sont disposé au-dessus des vérins pour la première nappe, permet de découper et bloquer les fibres au plus près du rouleau, tout en réduisant au minimum l'écart entre la distance de réacheminement d'une fibre de la première nappe et celle d'une fibre de la deuxième nappe.

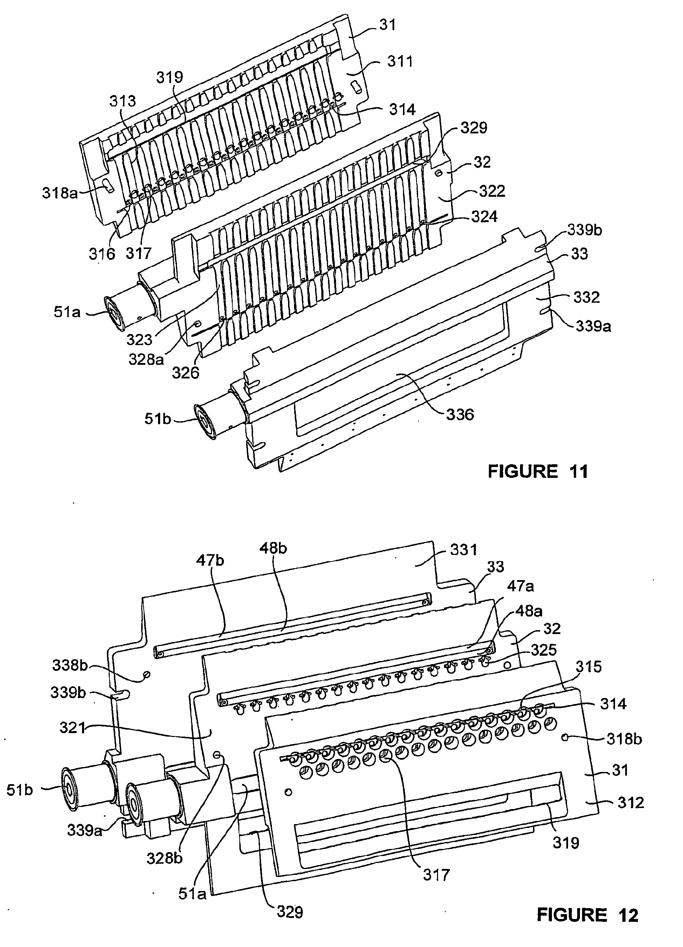

Le module comprend des premiers systèmes de réacheminement 5A pour le réacheminement des fibres de la première nappe. Suivant la figure 5, ces premiers systèmes comprennent un rouleau d'entraînement 51a et des contre-galets 52 montés aux extrémités des tiges de vérins pneumatiques 54. Les vérins sont assemblés par leur corps en une rangée sur la première traverse 231 de sorte que les contre-galets soient disposés en amont des systèmes de coupe et de blocage 4A, 4B, dans une ouverture transversale 319 (figure 11 et 12) traversante de la première plaque, chaque contre-galet étant centré selon un premier canal C1. Le rouleau d'entraînement 51a est monté rotatif dans un alésage transversal de la plaque centrale 32. Cet alésage débouche sur la première face principale 321 en vis-à-vis de l'ouverture 319, et le rouleau est disposé dans l'alésage tangentiellement à ladite surface principale. Chaque vérin 54 peut être commandé individuellement entre une position de repos, dans laquelle son contre-galet est en retrait par rapport au canal de guidage C1, et une position active dans laquelle le contre-galet vient plaquer la fibre contre le rouleau d'entraînement pour faire avancer la fibre.

De manière similaire, les seconds systèmes de réacheminement comprennent des vérins assemblés par leur corps en une rangée sur une quatrième traverse 234 en amont des premiers systèmes de réacheminement 5A avec leurs contre-galets disposés dans une ouverture transversale 329 traversante de la plaque centrale, chaque contre-galet étant centré selon un second canal C2. La première plaque extérieure présente une longueur inférieure aux deux autres plaques et ladite ouverture 328 est ménagée dans une partie de la plaque centrale, d'épaisseur réduite, disposée en amont de la première plaque extérieure. Comme visible sur la figure 5, les systèmes de support 55 des contre-galets sur la tige de vérin présentent latéralement des encoches 55a pour permettre les passages des fibres de la première nappe. Un rouleau 51 b est monté rotatif dans un alésage transversal de la deuxième plaque extérieure 33, tangentiellement à ladite surface principale.

Suivant les figures 4 et 5, les deux rouleaux d'entraînement sont entraînés en rotation via une courroie 84 par un seul moteur 85 monté sur la platine 10. Pour faciliter le montage du module, la tension de la courroie 84 est réglée par un système de tension de courroie comprenant une poulie 861 montée à l'extrémité d'un bras pivotant 862 actionné par un vérin 863.

Les vérins d'actionnement des systèmes de coupe et de guidage ainsi que des systèmes de réacheminement sont connectés à des distributeurs pneumatiques 87 montés sur la platine et asservis par une unité de commande de la tête. Cette connexion est réalisée automatiquement par l'intermédiaire des deux plaques de connexion 82, 83 lors de l'assemblage du module sur la platine par les systèmes de verrouillage rapides 25. Tous les vérins d'actionnement sont reliés par des conduites (non représentées) aux ouvertures inférieures des conduits de la deuxième plaque de connexion 83, tandis que les sorties des distributeurs sont connectées par des conduites aux ouvertures supérieures des conduits de la première plaque de connexion 82. Des joints toriques au niveau des ouvertures inférieures des conduits de la première plaque de connexion garantiront l'étanchéité des connexions.

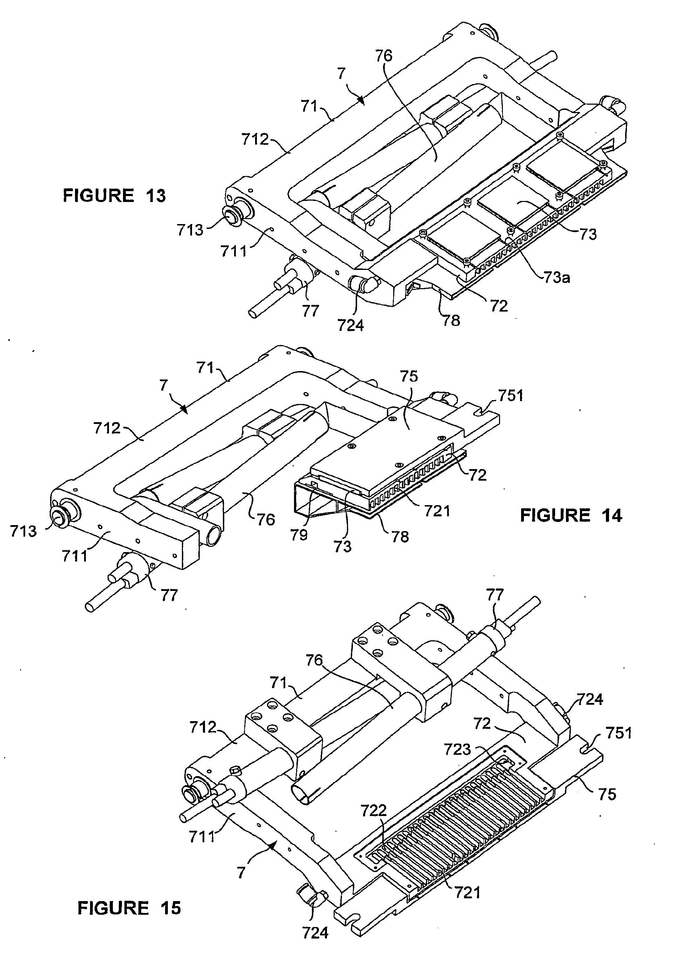

En référence aux figures 4 et 13 à 15, la tête comprend en outre un système de régulation thermique 7 comportant des moyens de refroidissement, tel que des modules thermoélectriques à effet Peltier, pour refroidir le système de guidage 4, et des moyens de chauffage pour chauffer les fibres en sortie du système de guidage et/ou le moule à draper en amont du rouleau.

Le système de régulation comprend un support 71 en U dont les deux branches 711 sont reliées en extrémité par une plaque support 72 sur laquelle sont montés des modules thermoélectriques à effet Peltier 73, par exemple au nombre de trois. Le support en U est équipé à sa base 712 de deux axes 713 pour son montage pivotant au moyen de deux bras 74 sur la rampe du système d'amenée 6, de sorte que les plaques de céramique froides des modules soient disposées en vis-à-vis de la deuxième plaque extérieure 33, tel qu'illustré notamment à la figure 5. Les sorties 73a des modules seront reliées à un circuit électrique, et les modules sont recouverts d'une plaque de protection 75 venant se loger dans un renfoncement 336 de la deuxième surface principale 332 de la deuxième plaque extérieure. Les modules assurent le refroidissement des plaques métalliques, ainsi que celui des rouleaux d'entraînement 51 a, 51 b intégrés dans la plaque centrale et la plaque extérieure. Les tiges filetées inférieures 282 sont avantageusement reçues dans des encoches latérales 751 de la plaque de protection et les écrous 283 sont vissés sur ces tiges pour venir en appui contre la plaque de protection, et ainsi bien serrer la plaque de protection contre le système de guidage. Les moyens de chauffage comprennent deux conduits 76 montés sur le support, équipé d'un système de chauffage 77, et destiné à être connecté à une source d'air comprimé. Les deux conduits alimentent une buse 78 de soufflage d'air chaud disposé contre la plaque support 72, à l'opposé des modules à effet Peltier. Lorsque le support est en appui contre le système de guidage, la buse oriente le flux d'air chaud en direction du rouleau.

La plaque support sert avantageusement de dissipateur de chaleur pour dissiper la chaleur des plaques de céramique chaudes. La plaque support présente sur sa face opposée aux modules une pluralité de rainures parallèles 721 débouchant sur son bord avant et reliées entre elles par une rainure transversale 722. Ces rainures 271, 272 sont refermées par une plaque intermédiaire 79, et la rainure transversale est alimentée en extrémité en air frais par des canaux transversaux 723 destinés à être connectés via des raccords 724 à une source d'air comprimé.

Le module 2 intègre l'ensemble des éléments de la tête venant en contact avec les fibres. Le module peut facilement être démonté pour être nettoyé, sans toucher aux connexions pneumatiques des vérins, après avoir simplement dégagé la courroie des rouleaux d'entraînement, et éventuellement retiré les systèmes d'amenée des fibres et de régulation thermique, dans le cas où l'on souhaite utiliser la tête avec un autre module propre. Les plaques du système de guidage peuvent être retirées une par une pour nettoyer toutes les surfaces en contact avec les fibres et les rouleaux, et éventuellement changer les contre-outils. Après le retrait des plaques, les contre-galets, les plots et les lames sont facilement accessibles et peuvent aisément être nettoyés. Les lames pourront par ailleurs aisément être changées tel que décrit précédemment.

## Revendications

1. Tête d'application de fibres, destinée à être montée à l'extrémité d'un système de déplacement pour l'application sur une surface d'une bande large formée de plusieurs fibres, comprenant
- un rouleau d'application (R) pour l'application des fibres (F1, F2) sous la forme d'une bande,
- des moyens de guidage (C1, C2) de fibres sur ledit rouleau,
- des moyens de coupe (4A, 4B) aptes à couper les fibres en amont du rouleau d'application, lesdits moyens de coupe comprenant des lames (41) actionnées par des systèmes d'actionnement (40) entre une position de repos et une position active de coupe, et
- des moyens de réacheminement (5A, 5B) des fibres disposés en amont des moyens de coupe (4A, 4B), lesdits moyens de réacheminement comprenant des contre-galets (52) actionnés par des systèmes d'actionnement (54) entre une position de repos et une position active pour plaquer les fibres contre au moins un rouleau d'entraînement (51 a, 51 b),
lesdites lames (41) et les systèmes d'actionnement (40) associés étant tous disposés du côté du rouleau (R) par rapport auxdites fibres (F1, F2), de sorte que les lames soient disposées en vis-à-vis de la face des fibres venant contre le rouleau, les moyens de guidage comprenant des premiers et seconds moyens de guidage (C1, C2) disposés en quinconce selon deux plans de guidage (P1, P2) se rapprochant l'un de l'autre d'amont en aval pour guider les fibres (F1, F2) vers le rouleau (R) sous la forme de deux nappes de fibres,
les moyens de coupe comprenant des premiers moyens de coupe (4A), dont les lames (41) sont aptes à couper individuellement les fibres de la première nappe guidées par les premiers moyens de guidage, et des seconds moyens de coupe (4B) dont les lames sont aptes à couper individuellement les fibres de la seconde nappe guidées par les seconds moyens de guidage, en passant entre les premiers moyens de guidage (C1),
**caractérisée en ce que** les contre-galets (52) des moyens de réacheminement et leurs systèmes d'actionnement (54) associés sont disposés du côté du rouleau (R) par rapport aux fibres (F1, F2).

2. Tête d'application selon la revendication 1, **caractérisée en ce que** les lames (41) des premiers moyens de coupe (4A) et les lames des seconds moyens de coupe (4B) sont disposées en quinconce selon deux plans inclinés l'un par rapport à l'autre d'un angle correspondant sensiblement à l'angle entre les deux plans de guidage (P1, P2), les seconds moyens de coupe étant disposés au dessus des premiers moyens de coupe par rapport au rouleau (R).

3. Tête d'application selon la revendication 1 ou 2, **caractérisée en ce que** les moyens de guidage comprennent des premiers canaux (C1) et des second canaux (C2), lesdits premiers canaux sont formés à l'interface d'assemblage entre une première plaque extérieure (31) et une plaque centrale (32), et lesdits seconds canaux (C2) sont formés à l'interface d'assemblage entre ladite plaque centrale (32) et une deuxième plaque extérieure (33), les lames des premiers moyens de coupe passant à travers la première plaque extérieure, et les lames des seconds moyens de coupe passant à travers la première plaque et la plaque centrale.

4. Tête d'application selon la revendication 3, **caractérisée en ce que** les moyens de coupe comprennent des contres-outils (47a, 47b) disposés perpendiculairement aux canaux de guidage (C1, C2), en vis-à-vis des bords de coupe (411) des lames (41), et contre lesquels les lames viennent en butée en position de coupe.

5. Tête d'application selon la revendication 4, **caractérisée en ce que** les contre-outils des premiers moyens de coupe sont formés par une barre en matériau élastomère logée dans un logement de la plaque centrale (32), et les contre-outils des seconds moyens de coupe sont formés par une barre en matériau élastomère logée dans un logement de la deuxième plaque extérieure (33).

6. Tête d'application selon l'une des revendications 3 à 5, **caractérisée en ce que** les moyens de réacheminement comprennent
- des premiers moyens de réacheminement (5A) comportant un premier rouleau d'entraînement (51a), monté sur la plaque centrale (32), perpendiculairement et tangentiellement aux premiers canaux de guidage (C1), et des contre-galets (52) actionnés par des systèmes d'actionnement (54) entre une position de repos et une position active pour plaquer individuellement les fibres de la première nappe contre ledit premier rouleau d'entraînement, et
- des seconds moyens de réacheminement (5B) disposés en amont des premiers moyens de réacheminement, comportant un second rouleau d'entraînement (51 b), monté sur la deuxième plaque extérieure (53), perpendiculairement et tangentiellement aux seconds canaux de guidage (C2), et des contre-galets actionnés entre une position de repos et une position active par des systèmes d'actionnement s'étendant entre les fibres de la première nappe pour plaquer individuellement les fibres de la deuxième nappe contre ledit second rouleau d'entraînement.

7. Tête d'application selon l'une des revendications 1 à 6, **caractérisée en ce qu'**elle comprend une platine support (10) par laquelle ladite tête est destinée à être assemblée à un système de déplacement (S), lesdits moyens de coupe (4A, 4B), lesdits moyens de guidage (3) et ledit rouleau d'application (R) forment un module (2), ledit module étant apte à être assemblé par des moyens de verrouillage (25) à l'extrémité de la tige (81a) d'au moins un vérin de compactage (81) monté sur ladite platine support.

8. Tête d'application selon l'une des revendications 1 à 7, **caractérisée en ce qu'**elle comprend en outre un système de régulation thermique (7) comprenant des moyens de refroidissement (73) aptes à refroidir la deuxième plaque extérieure (33) afin de refroidir par conduction l'ensemble des plaques de guidage (31, 32, 33).

9. Tête d'application selon l'une des revendications 1 à 8, **caractérisée en ce que** les moyens de coupe comprennent un système d'actionnement de type vérin pour chaque lame.

10. Tête d'application de fibres selon l'une des revendications 1 à 9, **caractérisée en ce qu'**elle comprend en outre des moyens de blocage disposés en amont des moyens de coupe, du côté du rouleau d'application, aptes à bloquer les fibres venant d'être coupées, lesdits moyens de blocage comprenant des plots de blocage (43) actionnés par des systèmes d'actionnement entre une position de repos et une position active de blocage, lesdits plots de blocage et lesdites lames (41) étant actionnées entre leur position de repos et leur position active par des systèmes d'actionnement communs, lesdits systèmes d'actionnement étant aptes, pour chaque fibre à couper et à bloquer, à déplacer une lame et un plot de blocage pour couper et bloquer la fibre.

11. Tête d'application selon la revendication 10, **caractérisée en ce que** lesdits systèmes d'actionnement comprennent pour chaque fibre un vérin (40) portant à l'extrémité de sa tige (42) un plot (43) et une lame plane (41) pour couper et bloquer individuellement une fibre.

12. Tête selon la revendication 11 en combinaison avec la revendication 3, **caractérisée en ce que** les moyens de blocage comprennent des contres-outils de blocage disposés en vis-à-vis des surfaces d'appui (431) des plots (43) et contre lesquels les plots viennent en butée en position active de blocage, lesdits contre-outils comprenant deux barres rigides (48a, 48b) logées respectivement dans un logement de la plaque centrale (32) et dans un logement de la deuxième plaque extérieure (33), perpendiculairement aux canaux de guidage (C1, C2).

## Patentansprüche

1. Auftragungskopf für Fasern, der dazu bestimmt ist, an das Ende eines Bewegungssystems zum Auftragen auf eine Oberfläche eines breiten Bands, das aus mehreren Fasern gebildet ist, montiert zu werden, der Folgendes umfasst
- eine Auftragungswalze (R) zum Auftragen der Fasern (F1, F2) in der Form eines Bands,
- Mittel (C1, C2) zum Führen von Fasern auf der Walze,
- Schneidmittel (4A, 4B), die geeignet sind, um die Fasern stromaufwärts der Auftragungswalze zu schneiden, wobei die Schneidmittel Klingen (41) umfassen, die durch Betätigungssysteme (40) zwischen einer Ruheposition und einer aktiven Schneidposition betätigt werden, und
- Weiterbeförderungsmittel (5A, 5B) der stromaufwärts der Schneidmittel (4A, 4B) aufgetragenen Fasern, wobei die Weiterbeförderungsmittel Gegenwalzen (52) umfassen, die von Betätigungssystemen (54) zwischen einer Ruheposition und einer aktiven Position betätigt werden, um die Fasern gegen mindestens eine Antriebswalze (51a, 51b) zu drücken,
wobei die Klingen (41) und die dazugehörenden Betätigungssysteme (40) alle auf der Seite der Walze (R) in Bezug auf die Fasern (F1, F2) derart angeordnet sind, dass die Klingen gegenüber der Seite der Fasern angeordnet sind, die gegen die Walze kommen, wobei die Führungsmittel erste und zweite Führungsmittel (C1, C2) umfassen, die im Zickzack gemäß zwei Führungsebenen (P1, P2) angeordnet sind, die sich einander stromaufwärts und stromabwärts nähern, um die Fasern (F1, F2) zu der Walze (R) in Form von zwei Faserlagen zu führen,
wobei die Schneidmittel erste Schneidmittel (4A) umfassen, deren Klingen (41) geeignet sind, um die Fasern der ersten Lage, die von den ersten Führungsmitteln geführt werden, zu schneiden, und zweite Schneidmittel (4B), deren Klingen geeignet sind, um die Fasern der zweiten Lage, die von den zweiten Führungsmitteln geführt werden, zu schneiden, indem sie zwischen den ersten Führungsmitteln (C1) durchgehen,
**dadurch gekennzeichnet, dass** die Gegenwalzen (52) der Weiterbeförderungsmittel und ihre dazugehörenden Betätigungssysteme (54) auf der Seite der Walze (R) in Bezug auf die Fasern (S1, F2) angeordnet sind.

2. Auftragungskopf nach Anspruch 1, **dadurch gekennzeichnet, dass** die Klingen (41) der ersten Schneidmittel (4A) und die Klingen der zweiten Schneidmittel (4B) im Zickzack gemäß zwei schrägen Ebenen zueinander mit einem Winkel angeordnet sind, der im Wesentlichen dem Winkel zwischen den zwei Führungsebenen (P1, P2) entspricht, wobei die zweiten Schneidmittel oberhalb der ersten Schneidmittel in Bezug auf die Walze (R) angeordnet sind.

3. Auftragungskopf nach Anspruch 1 oder 2, **dadurch gekennzeichnet, dass** die Führungsmittel erste Kanäle (C1) und zweite Kanäle (C2) umfassen, wobei die ersten Kanäle an der Zusammenfügeschnittfläche zwischen einer ersten äußeren Platte (31) und einer zentralen Platte (32) ausgebildet sind, und wobei die zweiten Kanäle (C2) an der Zusammenfügeschnittfläche zwischen der zentralen Platte (32) und einer zweiten äußeren Platte (33) ausgebildet sind, wobei die Klingen der ersten Schneidmittel durch die erste äußere Platte durchgehen und die Klingen der zweiten Schneidmittel durch die erste Platte und die zentrale Platte durchgehen.

4. Auftragungskopf nach Anspruch 3, **dadurch gekennzeichnet, dass** die Schneidmittel Gegenwerkzeuge (47a, 47b) umfassen, die im rechten Winkel zu den Führungskanälen (C1, C2) gegenüber Schneidrändern (411) der Klingen (41) angeordnet sind, und gegen welche die Klingen in Schneidposition zum Anschlagen kommen.

5. Auftragungskopf nach Anspruch 4, **dadurch gekennzeichnet, dass** die Gegenwerkzeuge der ersten Schneidmittel aus einer Stange aus Elastomermaterial gebildet sind, die in einer Aufnahme der zentralen Platte (32) untergebracht ist, und die Gegenwerkzeuge der zweiten Schneidmittel aus einer Stange aus Elastomermaterial ausgebildet sind, die in einer Aufnahme der zweiten äußeren Platte (33) untergebracht ist.

6. Auftragungskopf nach einem der Ansprüche 3 bis 5, **dadurch gekennzeichnet, dass** die Weiterbeförderungsmittel Folgendes umfassen
- erste Weiterbeförderungsmittel (5A), die eine erste Antriebswalze (51a) umfassen, die auf die zentrale Platte (32) im rechten Winkel und tangential zu den ersten Führungskanälen (C1) montiert ist, und Gegenwalzen (52), die von Betätigungssystemen (54) zwischen einer Ruheposition und einer aktiven Position betätigt werden, um einzeln die Fasern der ersten Lage gegen die erste Antriebswalze zu drücken, und
- zweite Weiterbeförderungsmittel (5B), die stromaufwärts der ersten Weiterbeförderungsmittel angeordnet sind, die eine zweite Antriebswalze (51b) umfassen, die auf die zweite äußere Platte (53) im rechten Winkel und tangential zu den zweiten Führungskanälen (C2) montiert ist, und Gegenwalzen, die zwischen einer Ruheposition und einer aktiven Position von Antriebsystemen betätigt werden, die sich zwischen den Fasern der ersten Lage erstrecken, um die Fasern der zweiten Lage einzeln gegen die zweite Antriebswalze zu drücken.

7. Auftragungskopf nach einem der Ansprüche 1 bis 6, **dadurch gekennzeichnet, dass** er eine Tragplatte (10) umfasst, anhand welcher der Kopf mit einem Bewegungssystem (S) zusammenzubauen ist, wobei die Schneidmittel (4A, 4B), die Führungsmittel (3) und die auf Tragwalze (R) ein Modul (2) bilden, wobei das Modul geeignet ist, durch Verriegelungsmittel (25) an dem Ende des Schafts (81a) mindestens eines Kompaktierzylinders (81), der auf die Tragplatte montiert ist, zusammengefügt zu werden.

8. Auftragungskopf nach einem der Ansprüche 1 bis 7, **dadurch gekennzeichnet, dass** er außerdem ein thermisches Reguliersystem (7) umfasst, das Kühlmittel (73) umfasst, die geeignet sind, um die zweite äußere Platte (33) zu kühlen, um durch Leitung sämtliche Führungsplatten (31, 32, 33) zu kühlen.

9. Auftragungskopf nach einem der Ansprüche 1 bis 8, **dadurch gekennzeichnet, dass** die Schneidmittel ein Betätigungssystem des Typs Zylinder für jede Klinge umfassen.

10. Faserauftragungskopf nach einem der Ansprüche 1 bis 9, **dadurch gekennzeichnet, dass** er außerdem Blockierungsmittel umfasst, die stromaufwärts der Schneidmittel auf der Seite der Auftragungswalze angeordnet sind, die geeignet sind, um die Fasern, die soeben geschnitten wurden, zu blockieren, wobei die Blockierungsmittel Blockierungskontaktstücke (43) umfassen, die durch Betätigungssysteme zwischen einer Ruheposition und einer aktiven Blockierungsposition betätigt werden, wobei die Blockierungskontaktstücke und die Klingen (41) zwischen ihrer Ruheposition und ihrer aktiven Position von gemeinsamen Betätigungssystemen betätigt werden, wobei die Betätigungssysteme geeignet sind, um für jede zu schneidende und zu blockierende Faser eine Klinge und ein Blockierungskontaktstück zu bewegen und die Faser zu blockieren.

11. Auftragungskopf nach Anspruch 10, **dadurch gekennzeichnet, dass** die Betätigungssysteme für jede Faser einen Zylinder (40) umfassen, der an dem Ende seines Schafts (42) ein Kontaktstück (43) und eine flache Klinge (41) zum einzelnen Schneiden und Blockieren einer Faser trägt.

12. Kopf nach Anspruch 11, kombiniert mit Anspruch 3, **dadurch gekennzeichnet, dass** die Blockierungsmittel Blockierungsgegenwerkzeuge umfassen, die gegenüber Auflageoberflächen (431) der Kontaktstücke (43) angeordnet sind, und gegen welche die Kontaktstücke in aktiver Blockierungsposition zum Anschlagen kommen, wobei die Gegenwerkzeuge zwei starre Stangen (48a, 48b) umfassen, die jeweils in einer Aufnahme der zentralen Platte (32) und in einer Aufnahme der zweiten äußeren Platte (33) im rechten Winkel zu den Führungskanälen (C1, C2) untergebracht sind.

## Claims

1. Fibre application head, intended to be mounted at the end of a displacement system in order to apply to a surface a wide strip formed of a number of fibres, including
- an application roller (R) for applying the fibres (F1, F2) in the form of a strip,
- means (C1, C2) for guiding fibres on said roller, and
- cutting means (4A, 4B) able to cut the fibres upstream of the application roller, said cutting means including blades (41) activated by activation systems (40) between a rest position and an active cutting position, and
fibre rerouting means (5A, 5B) placed upstream of the cutting means (4A, 4B), said rerouting means including kicking rollers (52) activated by activation systems (54) between a rest position and an active position so as to flatten the fibres against at least one drive roller (51a, 51b),
said blades (41) and associated activation systems (40) being all placed on the side of the roller (R) relative to said fibres (F1, F2), such that the blades are placed facing the surface of the fibres coming against the roller the guide means including first and second guide means (C1, C2) arranged in staggered rows along two guide planes (P1, P2) that grow closer to each other from upstream to downstream in order to guide the fibres (F1, F2) towards the roller (R) in the form of two layers of fibres,
the cutting means including first cutting means (4A), the blades (41) of which are able to cut individually the fibres of the first layer guided by the first guide means, and second cutting means (4B) the blades of which are able to cut individually the fibres of the second layer guided by the second guide means, while passing between the first guide means (C1),
**characterised in that** the kicking rollers (52) of the fibre rerouting means and their associated activation systems (54) are placed on the side of the roller (R) relative to the fibres (F1, F2).

2. Application head according to claim 1, **characterised in that** the blades (41) of the first cutting means (4A) and the blades of the second cutting means (4B) are arranged in staggered rows along two planes inclined one relative to the other by an angle substantially equating to the angle between the two guide planes (P1, P2), the second cutting means being placed over the first cutting means relative to the roller (R).

3. Application head according to claim 1 or 2, **characterised in that** the guide means include first channels (C1) and second channels (C2), said first channels are formed at the assembly interface between a first external plate (31) and a central plate (32), and said second channels (C2) are formed at the assembly interface between said central plate (32) and a second external plate (33), the blades of the first cutting means passing through the first external plate, and the blades of the second cutting means passing through the first plate and the central plate.

4. Application head according to claim 3, **characterised in that** the cutting means include counter tools (47a, 47b) arranged perpendicularly to the guide channels (C1, C2), facing the cutting edges (411) of the blades (41), and against which the blades are stopped in the cutting position.

5. Application head according to claim 4, **characterised in that** the counter tools of the first cutting means are formed by a bar of an elastomer material housed in a housing in the central plate (32), and the counter tools of the second cutting means are formed by a bar of an elastomer material housed in a housing in the second external plate (33).

6. Application head according to one of claims 3 to 5, **characterised in that** the rerouting means include
- first rerouting means (5A) comprising a first drive roller (51a), mounted on the central plate (32), perpendicularly and tangentially to the first guide channels (C1), and kicking rollers (52) activated by activation systems (54) between a rest position and an active position so as to flatten the fibres of the first layer individually against said first drive roller, and
- second rerouting means (5B) placed upstream of the first rerouting means, comprising a second drive roller (51b), mounted on the second external plate (53), perpendicularly and tangentially to the second guide channels (C2), and kicking rollers activated between a rest position and an active position by activation systems extending between the fibres of the first layer so as to flatten the fibres of the second layer individually against said second drive roller.

7. Application head according to one of claims 1 to 6, **characterised in that** it includes a support deck (10) by which said head is intended to be joined to a displacement system (S), said cutting means (4A, 4B), said guide means (3) and said application roller (R) form a module (2), said module being able to be joined by quick-action locking means (25) to the end of the rod (81a) of at least one compaction jack (81) mounted on said support deck.

8. Application head according to one of claims 1 to 7, **characterised in that** it additionally includes a heat regulation system (7) including cooling means (73) able to cool the second external plate (33) so as to cool by conduction all the guide plates (31, 32, 33).

9. Application head according to one of claims 1 to 8, **characterised in that** the cutting means include a jack type activation system for each blade.

10. Application head according to one of claims 1 to 9, **characterised in that** it additionally includes blocking means placed upstream of the cutting means, on the side of the application roller, able to block the fibres that have just been cut, said blocking means including blocking studs (43) activated by activation systems between a rest position and an active blocking position, said blocking studs and said blades (41) being activated between their rest position and their active position by common activation systems, said activation systems being able, for each fibre to be cut and to be blocked, to displace a blade and a blocking stud in order to cut and block the fibre.

11. Application head according to claim 10, **characterised in that** said activation systems include a jack (40) for each fibre, carrying at the end of its rod (42) a stud (43) and a plane blade (41) for cutting and blocking a fibre individually.

12. Application head according to claim 11, in combination with claim 3, **characterised in that** the blocking means include blocking counter tools placed facing the support surfaces (431) of the studs (43) and against which the studs are stopped in the active blocking position, said counter tools including two rigid bars (48a, 48b) housed in a housing in the central plate (32) and in a housing in the second external plate (33) respectively, perpendicularly to the guide channels (C1, C2).
